**Europäisches Patentamt**

**European Patent Office**

**Office européen des brevets**

(11) Veröffentlichungsnummer : **0 439 483 B1**

(19)

(12) # EUROPÄISCHE PATENTSCHRIFT

(45) Veröffentlichungstag der Patentschrift :
09.09.92 Patentblatt 92/37

(51) Int. Cl.⁵ : **G11B 17/22**

(21) Anmeldenummer : **89911528.1**

(22) Anmeldetag : **17.10.89**

(86) Internationale Anmeldenummer :
**PCT/DE89/00659**

(87) Internationale Veröffentlichungsnummer :
**WO 90/04845 03.05.90 Gazette 90/10**

(54) **Plattenabspielgerät.**

(30) Priorität : **19.10.88 DE 3835590**
**11.07.89 DE 3922721**

(43) Veröffentlichungstag der Anmeldung :
**07.08.91 Patentblatt 91/32**

(45) Bekanntmachung des Hinweises auf die
Patenterteilung :
**09.09.92 Patentblatt 92/37**

(84) Benannte Vertragsstaaten :
**AT BE CH DE FR GB IT LI LU NL SE**

(56) Entgegenhaltungen :
**EP-A- 0 138 005**
**EP-A- 0 277 634**

(56) Entgegenhaltungen :
**EP-A- 0 280 263**
**EP-A- 0 281 006**
**EP-A- 0 284 445**
**DE-C- 3 521 913**
**Patent Abstracts of Japan, vol.10, no.60 P435,**
**abstract JP 60-201566, published in 1985-10-12**

(73) Patentinhaber : **NSM AKTIENGESELLSCHAFT**
**Saarlandstrasse 240**
**W-6530 Bingen am Rhein (DE)**

(72) Erfinder : **MENKE, Wilhelm**
**Parkstrasse 18**
**W-6200 Wiesbaden (DE)**

(74) Vertreter : **Becker, Bernd, Dipl.-Ing.**
**Hauptstrasse 10**
**W-6530 Bingen 17 (DE)**

EP 0 439 483 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung bezieht sich auf ein Plattenabspielgerät mit zwei einander gegenüberliegenden Plattenspeichermagazinen, die eine Vielzahl übereinanderliegend in Aufnahmefächern gelagerter, jeweils eine Platte aufnehmender Plattenhalter aufweisen und mit einer eine Auszugeinrichtung mit einem Greifarm umfassenden Transporteinrichtung, die in Stapelrichtung der Plattenspeichermagazine bewegbar ist, um eine gewünschte Platte mit dem zugehörigen Plattenhalter zwischen dem Aufnahmefach und einer Abspieleinheit hin und her zu befördern.

Aus der DE 35 21 913 C2 ist ein Plattenabspielgerät mit zwei gegenüberliegenden Plattenspeichermagazinen bekannt, zwischen denen sich in vertikaler Richtung ein Schacht erstreckt. Innerhalb des Schachtes ist mit Hilfe einer Hebeeinrichtung eine Abspieleinheit verschiebbar. An der Rückseite der Plattenspeichermagazine ist eine Plattenauszugeinrichtung angeordnet, die Auszugarme aufweist, die aufeinander zu und voneinander weg bewegt werden können. Ferner sind die Auszugarme ebenfalls vertikal oder seitlich mittels der Plattenauszugeinrichtung verschiebbar. Für das Abspielen einer Platte muß also zum einen die Abspieleinheit durch die Hebeeinrichtung auf eine Höhe verschoben werden, die mit der Höhe des die ausgewählte Platte tragenden Plattenhalters im Plattenspeichermagazin übereinstimmt, und zum anderen müssen die Auszugarme der Plattenauszugeinrichtung durch Bewegung der Plattenauszugeinrichtung in vertikaler Richtung auf diese Höhe gebracht werden, um den Plattenteller mit der gewünschten Platte zu der Abspieleinheit zu befördern. Für den Abspielvorgang einer Platte muß demnach die Abspieleinheit und die Plattenauszugeinrichtung jeweils als gesondertes Bauteil für sich verfahren werden.

Weiterhin offenbart die DE 33 28 328 A1 einen Plattenwechsler mit einer Abspielvorrichtung mit einem in einem Gestell drehbar gelagerten Plattenteller und mit einer Ladevorrichtung zum Transportieren einer Platte von und zu dem Plattenteller. Die Ladevorrichtung umfaßt eine Plattform, die in der Auf- und Abwärtsrichtung gegenüber dem Plattenteller beweglich ist, ein Magazin mit einer Anzahl Plattenhalterungen, die horizontal in und aus der Plattform schiebbar sind, einen Transportmechanismus, der mit den betreffenden Plattenhalterungen längs der Plattform zum Bewegen der Plattenhalterungen aus dem Magazin zu der Plattform zusammenarbeitet und einen Hebemechanismus mit einem Liftabteil für das Magazin zum Bewegen des Magazins in eine gewünschte Höhenlage. Zum Andrücken einer Platte gegen den Plattenteller arbeitet die Ladevorrichtung mit einem schwenkbeweglich gelagerten, federbelasteten Andrückhebel mit einem Plattendrücker zusammen. Zum Abspielen einer Platte ist es hierbei also erforderlich, das Magazin mit Hilfe des Hebemechanismus des Liftabteils zu verfahren, den Transportmechanismus für den Plattenhalter in Funktion zu setzen, die Plattform in Richtung auf die Abspielvorrichtung zu verfahren und den Andrückhebel mit dem Plattendrücker zu verschwenken. Auch bei diesem Plattenwechsler müssen demnach zwei gesonderte Bauteile, nämlich das Magazin und die Plattform, relativ zueinander bewegt werden.

Ferner zeigt die EP 0138 005 B1 eine Plattenwechselvorrichtung, bei der zwischen zwei vertikalen Plattenhüllen mit Platten speichernden Plattenmagazinen eine vertikal verfahrbare Plattenentnahmevorrichtung angeordnet ist, die einen auf dieser horizontal verfahrenbaren Plattenhüllengreifer trägt. Dieser Plattenhüllengreifer ist mit zwei Greifeinrichtungen versehen, von denen sich wahlweise eine in ihrer Bereitschaftsposition in dem linken oder rechten Plattenmagazin befindet, während die andere Greifeinrichtung eine entnommene Plattenhülle in der Mittenposition hält, in der sich die Platte oberhalb des Plattentellers des Abspielgerätes befindet. Sonach kann immer nur eine Greifeinrichtung des Plattenhüllengreifers eine Bereitschaftsposition zur Herausnahme einer Plattenhülle aus dem zugeordneten Plattenmagazin einnehmen, d.h. wenn eine Plattenhülle aus dem anderen Plattenmagazin entnommen werden soll, dann muß zunächst der Plattenhüllengreifer in Richtung dieses Plattenmagazins verfahren werden, um die andere Greifeinrichtung in eine Bereitschaftsposition zur Herausnahme einer Plattenhülle aus dem ihr zugeordneten Plattenmagazin zu bringen, was einen zusätzlichen Verfahrweg des Plattenhüllengreifers darstellt, der die Transportzeit der die gewünschte Platte enthaltenden Plattenhülle von dem Plattenmagazin zu dem Plattenteller der Abspieleinheit erhöht.

Schließlich ist aus der EP 0 280 263 A2 ein Plattenabspielgerät bekannt, bei dem die Platten in zwei Stapeln abgelegt werden und in zwei Abspielstationen abgespielt werden können. Die einzelnen Platten können von zwei Seiten abgespielt werden. Sie werden nach dem Abspielen nicht mehr in denselben Stapel zurückgelegt. Bei diesem Gerät wird ein unendliches Förderband als eine Auszugseinrichtung ausgebildet. Damit kann eine Platte ohne Wartezeit aus einem der beiden Magazine entnommen werden. Die Stellung der Auszugseinrichtung kann bei diesem Gerät nicht zur Kontrolle der Plattenposition herangezogen werden. Bei geringsten Unregelmäßigkeiten im Transport der Platten, beispielsweise bei der Abgabe der Platten aus dem Abspielgerät oder durch Erschütterungen der Anlage, sind daher empfindliche Störungen des Betriebes zu erwarten, die nicht hingenommen werden können.

Der Erfindung liegt die Aufgabe zugrunde, ein Plattenabspielgerät der eingangs genannten Art zu schaffen, das bei einem einfachen und kompakten Aufbau äußerst kurze Wege für die Beförderung eines Plattenhalters mit der gewünschten Platte von dem jeweiligen Plattenspeichermagazin zu der Abspieleinheit und zurück ermöglicht.

Diese Aufgabe wird erfindungsgemäß dadurch gelöst, daß die Transporteinrichtung eine zweite von der ersten unabhängig steuerbare Auszugeinrichtung für die Plattenhalter aufweist, wobei die beiden, auf der Transporteinrichtung horizontal verfahrbaren Auszugeinrichtungen sich jeweils in einer Bereitschaftsposition zur Herausnahme eines in dem zugeordneten Plattenspeichermagazin vorhandenen Plattenhalters für eine Platte befinden, oder wobei die eine Auszugeinrichtung in eine Mittenposition gefahren ist, in der sie die aus dem zugehörigen Plattenspeichermagazin entnommene Platte mit dem Plattenhalter konzentrisch zu dem Plattenteller der Abspieleinheit fixiert, während die andere Auszugeinrichtung in ihrer Bereitschaftsposition für das andere Plattenspeichermagazin verbleibt.

Das erfindungsgemäße Plattenabspielgerät ist sonach mit zwei unabhängig voneinander steuerbaren Auszugeinrichtungen für die Plattenhalter versehen, die sich beide jeweils in ihren Bereitschaftspositionen in den Plattenspeichermagazinen befinden können oder von denen jeweils eine in die Mittenposition, in der sie einen Plattenhalter auf die Transporteinrichtung befördert hat, gefahren ist, während die andere Auszugeinrichtung in ihrer Bereitschaftsposition in dem anderen Plattenspeichermagazin verharrt. Hieraus resultiert ein optimal kurzer Beförderungsweg für eine einzelne Platte bzw. den zugehörigen Plattenhalter, wodurch sich eine entsprechend kurze Beförderungszeit der Platte bzw. des Plattenhalters ergibt. Demnach kann relativ schnell die auf der Platte gespeicherte Information zu Gehör gebracht werden.

Besonders geeignet ist das erfindungsgemäße Plattenabspielgerät für den Einsatz einer Abspieleinheit, die auf optische Weise eine Audio-Platte mittels eines Lichtstiftes mit einem Laser abtastet. Derartige Platten, bekannt als "Kompakt-Disc", haben eine lange Spielzeit und dennoch einen geringen Durchmesser von bis zu 8 cm, wodurch es möglich ist, eine Abspieleinheit und Plattenspeichermagazine einer gedrängten Konstruktion zu benutzen, so daß das Plattenabspielgerät insgesamt eine verhältnismäßig kleine Baugröße aufweist.

Damit beim Abspielen die Platte genauestens auf dem Plattenteller der Abspieleinheit positioniert ist, setzt nach einer vorteilhaften Ausgestaltung der Erfindung die eine Platte mit dem Plattenhalter tragende Transporteinrichtung bei ihrer Abwärtsbewegung über die Abspieleinheit hinaus in ihre Endposition die Platte unter Abheben aus dem Plattenhalter auf den Plattenteller auf und verspannt sie mittels eines an der Transporteinrichtung feststehend angeordneten Plattenandrückers mit dem Plattenteller.

Um ein zeitlich unmittelbares Abspielen von Platten hintereinander, wie es in Diskotheken gefordert wird, zu ermöglichen, sind nach einer weiteren Ausgestaltung der Erfindung mehrere Abspieleinheiten mit jeweils zugehöriger Transporteinrichtung unter Zwischenschaltung eines beidseitig offenen, durch benachbarte Transporteinrichtungen zugänglichen Plattenspeichermagazins in Reihe angeordnet, wobei an jedem Ende der Reihe ein weiteres Plattenspeichermagazin vorgesehen ist.

Zur Erleichterung des Plattenauswechselns in den Magazinen ist nach einer vorteilhaften Weiterbildung des Erfindungsgegenstandes jedes Plattenspeichermagazin in seiner feststehenden Position mit dem Gehäuse des Plattenabspielgerätes verriegelt, nach Aufhebung einer ersten Verriegelung um eine Schwenkachse aus dem Gehäuse herausschwenkbar und nach Lösung einer zweiten Verriegelung aus dem Gehäuse entnehmbar. Zweckmäßigerweise sind hierbei die beiden Verriegelungen des Plattenspeichermagazins über ein Gestänge derart mit einem Verschiebehebel verbunden, daß das Plattenspeichermagazin bei einer Bewegung des Verschiebehebels in der einen Richtung zum Ausschwenken und in der anderen Richtung zur Herausnahme entriegelt ist. Dies erhöht den Bedienkomfort.

Um bei einer möglichen Schwenklage des Plattenabspielgerätes, beispielsweise bei einem Transport desselben, ein Herausgleiten der Plattenhalter aus dem Plattenspeichermagazin zu verhindern, ist bei einer vorteilhaften Ausgestaltung der erfindungsgemäßen Lösung jeder Plattenhalter durch zwei gegenüberliegende, am Plattenspeichermagazin angebrachte Federelemente in einer gesicherten Lage im Aufnahmefach positioniert, in der der Plattenhalter soweit über das Plattenspeichermagazin vorsteht, daß er von der Auszugeinrichtung der Transporteinrichtung erfaßbar ist. Zweckmäßigerweise besteht dabei jedes Federelement aus einem U-förmigen Bügel, dessen Schenkel in Führungsnuten am Plattenspeichermagazin eingreifen und dessen Steg mittig eine Sicke aufweist, die in einen an der entsprechenden Längsseite des Plattenhalters liegenden Einschnitt eingreift. Bevorzugt sind die jeweils auf einer Seite den Aufnahmefächern zugeordneten Bügel unter Verbindung im Bereich ihrer Schenkel zu einem durchgehenden Band zusammengefaßt, wodurch die Montage der Federelemente wesentlich erleichtert wird.

Weiterhin ist bevorzugt vorgesehen, daß der Plattenhalter auf seiner Unterseite in der Ebene der gegenüberliegenden Einschnitte mehrere Noppen aufweist, die ein Herausfallen der auf dem darunterliegenden Plattenhalter aufliegenden Platte verhindern. Zweckmäßigerweise wirkt hierbei eine der Noppen mit einem Schaltkontakt zur Feststellung des Vorhandenseins einer Platte im Aufnahmefach zusammen.

Zur Erzielung einer besonders einfachen und zuverlässigen Lage der Platte im Plattenhalter und einer Freigabe derselben beim Abspielvorgang, weist nach einer vorteilhaften Weiterbildung der Erfindung der Plattenhalter eine die Platte aufnehmende Ausnehmung mit einem abgeschrägten Randbereich, der in einen vertikalen Randbereich übergeht, und im Boden der Ausnehmung eine Öffnung auf, in die der Plattenteller der Abspieleinheit einführbar ist, und der Boden der Ausnehmung besitzt eine in zwei gegenüberliegende Segmente aufgeteilte Randschulter zur Unterstützung der Platte in ihrem keine gespeicherten Daten tragenden Randbereich.

Damit der Plattenhalter von der Auszugeinrichtung der Transporteinrichtung unabhängig von seiner eingeschobenen Lage im Aufnahmefach erfaßt werden kann, besitzt nach einer vorteilhaften Ausgestaltung der Erfindung der Plattenhalter an seinen Längsseiten jeweils im vorderen Bereich unterseitig eine Ausnehmung, und entsprechend der Lage des Plattenhalters im Aufnahmefach ist der Greifarm der Auszugeinrichtung der Transporteinrichtung mit einer dieser Ausnehmungen in Eingriff bringbar.

Bei einer besonders vorteilhaften Ausgestaltung der Auszugeinrichtung der Transporteinrichtung ist der Greifarm in einem hin- und herbeweglichen Schlitten ein- und ausfahrbar gelagert und in der Ausgangsstellung des Schlittens durch einen federbelasteten Winkelhebel mit zugeordnetem Anschlaghebel in seiner eingefahrenen Stellung derart gehalten, daß er bei einer Bewegung des Schlittens aus der Ausgangsstellung von dem Winkelhebel in die ausgefahrene, in die Ausnehmung des Plattenhalters eingreifende Stellung bringbar ist und anschließend durch einen feststehenden, an seiner Rückseite anliegenden Anschlag in dieser Stellung verbleibt. Bevorzugt ist hierbei der Winkelhebel bei der Bewegung des Schlittens in die von einem Anschlagwinkel begrenzte Ausgangsstellung durch den an dem Winkelhebel angelenkten Anschlaghebel derart verschwenkbar, daß er unter Eingriff in eine entsprechende Ausnehmung im Greifarm diesen in seine eingefahrene Stellung im Schlitten zurückzieht. Dem Winkelhebel ist bevorzugt eine Lichtschranke zur Feststellung der Ausgangsstellung des Schlittens zugeordnet. Zweckmäßigerweise ist der Anschlag für die Rückseite des Greifarms durch eine Wand des Oberteils der Transporteinrichtung und durch jeweils einen endseitig neben dieser Wand liegenden, an dem Unterteil der Transporteinrichtung befestigten Rundstift gebildet.

Für eine zuverlässige Hin- und Herbewegung des Schlittens sind nach einer vorteilhaften Weiterbildung der erfindungsgemäßen Lösung die auf einer Tragstange gleitbeweglich geführten Schlitten der Auszugeinrichtungen (12) jeweils über einen Riementrieb mit Schneckengetriebe und drehrichtungsumkehrbaren Motor antreibbar. Selbstverständlich kann statt des Riementriebes auch ein Seilzug-, Spindelantrieb oder dergleichen eingesetzt werden.

Damit der Schlitten auch von Hand verschoben werden kann, ist zweckmäßigerweise zwischen dem Schneckengetriebe und dem Antriebsrad des Zahnriemens des Riementriebes eine Rutschkupplung vorgesehen. Weiterhin dient bevorzugt bei der Herausnahme eines Plattenhalters aus einem Aufnahmefach mittels des Schlittens der einen Auszugeinrichtung der Schlitten der anderen Auszugeinrichtung in der Endlage des Plattenhalters auf einem U-förmigen Tragarm der Transporteinrichtung als Anschlag.

Für die Kontrolle der richtigen Lage des Plattenhalters auf dem U-förmigen Tragarm der Transporteinrichtung ist nach einer vorteilhaften Weiterbildung der Erfindung dem Tragarm der Transporteinrichtung eine Lichtschranke zur Überwachung der konzentrischen Lage der im Plattenhalter gespeicherten Platte zu dem Plattenteller der Abspieleinheit zugeordnet, wobei der Plattenhalter eine entsprechend angebrachte Lichtdurchtrittsöffnung aufweist. Alternativ hierzu ist es auch möglich, dem Tragarm der Transporteinrichtung endseitig jeweils eine Lichtschranke zur Überwachung der konzentrischen Lage der im Plattenhalter gespeicherten Platte zu dem Plattenteller der Abspieleinheit zuzuordnen.

Zur Erreichung einer kompakten Zuordnung der Transporteinrichtung zu Abspieleinheit und dem Plattenspeichermagazin ist nach einer weiteren vorteilhaften Ausgestaltung der Erfindung die Transporteinrichtung auf zwei an der Rückseite des Gehäuses angebrachten, vertikal verlaufenden Führungsstangen gleitbeweglich gelagert und über einen doppelten Riemenantrieb mit drehrichtungsumkehrbaren Antriebsmotor auf- und abwärtsbewegbar. Selbstverständlich kann anstelle des Riemenantriebs auch ein Seilzug-, Spindelantrieb oder dergleichen zur Anwendung kommen. Bevorzugt trägt der als Schrittmotor ausgebildete Antriebsmotor auf seiner Achse ein Flügelrad, das in der Gabel eines Positionierimpulse erzeugenden Gabelkopplers läuft. Dadurch ist ein teilungsgenaues Halten der Transporteinrichtung vor den Aufnahmefächern des Plattenspeichermagazins gewährleistet.

Zur Erreichung eines einfach aufgebauten und sicher funktionierenden Plattenandrückers der Transporteinrichtung umfaßt bei einer weiteren vorteilhaften Ausgestaltung des Erfindungsgegenstandes der Plattenandrücker einen feststehenden, parallel zum Tragarm der Transporteinrichtung verlaufenden Haltearm mit einem Haltekopf, in dem längsverschieblich und freipendelnd ein Plattenandrück-Einsatz mit einem mittig angeordneten Magneten gelagert ist, wobei der Magnet mit der magnetisierbaren Antriebsachse des Plattentellers der Abspieleinheit zusammenwirkt. Zweckmäßigerweise besitzt hierbei der Plattenandrück-Einsatz des Haltekopfes randseitig einen umlaufenden Gummi-Flachring, der aufgrund der Kraftwirkung zwischen dem Magneten und der Antriebsachse des Plattentellers in der Endposition der Transporteinrichtung die Platte auf den Plattenteller drückt. Des weiteren ist bevorzugt der Plattenandrück-Einsatz über einen mit ihm verbundenen Konus in einer dazu korrespondierenden Aufnahmeöffnung einer Zwischenwand des Haltekopfes gelagert.

Bei einer vorteilhaften Alternativausführung der Erfindung weist der Plattenandrücker einen feststehenden, parallel zum Tragarm der Transporteinrichtung verlaufenden Haltearm mit einem Haltekopf auf, in dem längsverschieblich mit relativ großem Spiel ein Plattenandrück-Einsatz mit einem mittig angeordneten Magneten gelagert ist, der in der Ruhestellung des Plattenandrück-Einsatzes mit einer in den Haltekopf eingesetzten magnetisierbaren Stahlplatte und in der Arbeitsstellung des Plattenandrück-Einsatzes mit der magnetisierbaren Antriebsachse des Plattentellers der Abspieleinheit zusammenwirkt. Dadurch ergibt sich in der Ruhestellung des Plattenandrückers ein definierter Abstand zum Plattenhalter mit eingelegter Platte, was eine geringe Bauhöhe sicherstellt. Bevorzugt ist die magnetisierbare Stahlplatte in die Unterseite des Deckels des Haltekopfes eingeklipst und wirkt über einen in den Plattenandrück-Einsatz eingesetzten magnetisierbaren Stahlstab mit dem Magneten zusammen. Um die Platte sicher auf dem Plattenteller festzulegen, weist zweckmäßigerweise der Plattenandrück-Einsatz an der Peripherie seiner Unterseite drei um 120° zueinander versetzt angeordnete Noppen auf, die aufgrund der Kraftwirkung zwischen dem Magneten und der Antriebsachse des Plattentellers in der Position der Transporteinrichtung die Platte auf den Plattenteller drücken.

Nach einer weiteren vorteilhaften Weiterbildung des Erfindungsgegenstandes ist einem Plattenspeichermagazin eine einen Plattenhalter mit einer eingelegten Platte aufnehmende Schublade derart zugeordnet, daß im eingeschobenen Zustand der Schublade dieser Plattenhalter mit der Platte mittels der Transporteinrichtung zu der Abspieleinheit und von dieser wieder in die Schublade beförderbar ist und im herausgezogenen Zustand der Schublade die von dem Plattenhalter getragene Platte von Hand auswechselbar ist. Hierdurch ist auf einfache Weise das Abspielen und Lagern einer einzelnen Platte ohne ein entsprechendes Auswechseln in einem Plattenspeichermagazin möglich, d.h. eine nicht in einem Plattenspeichermagazin vorhandene Platte kann für sich abgespielt und gespeichert werden.

Um das unmittelbare Abspielen einer einzelnen Platte zu ermöglicht,, ist an dem Plattenabspielgerät bevorzugt eine besondere Bedienungstaste vorgesehen, über die die Transporteinrichtung aus ihrer unteren Endstellung in eine obere Endstellung und anschließend wieder in die untere Endstellung verfahrbar ist, wobei die Abspieleinheit über eine weitere Bedienungstaste einschaltbar ist. In der oberen Endstellung der Transporteinrichtung kann sonach von Hand eine einzelne Platte auf den Plattenteller der Abspieleinheit gelegt bzw. von diesem abgeommen werden.

Der der Erfindung zugrundliegende Gedanke wird in der nachfolgenden Beschreibung anhand eines Ausführungsbeispieles, das in der Zeichnung dargestellt ist, näher erläutert. Es zeigt:

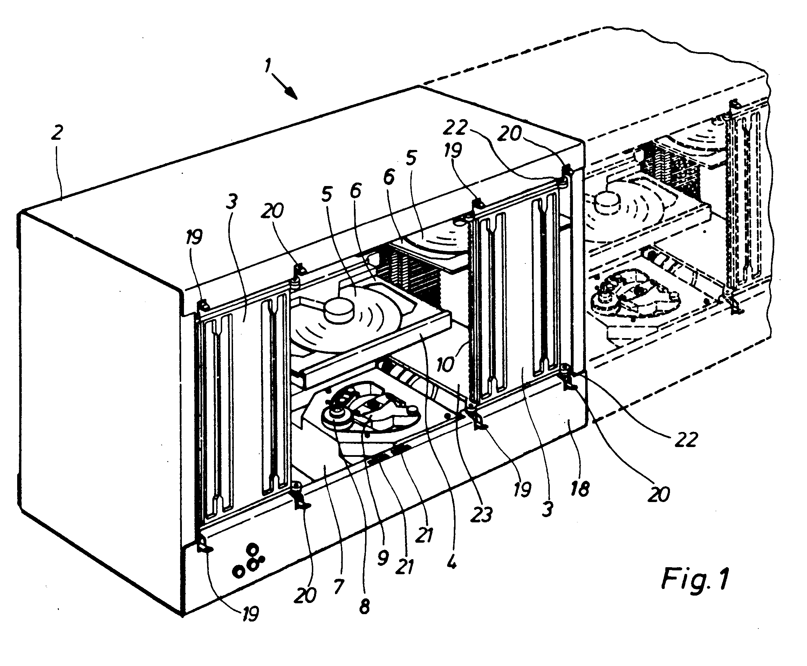

Fig. 1 eine perspektivische Ansicht eines Plattenabspielgerätes mit einem dazu in Reihe liegenden weiteren Plattenabspielgerät in gestrichelter Darstellung,

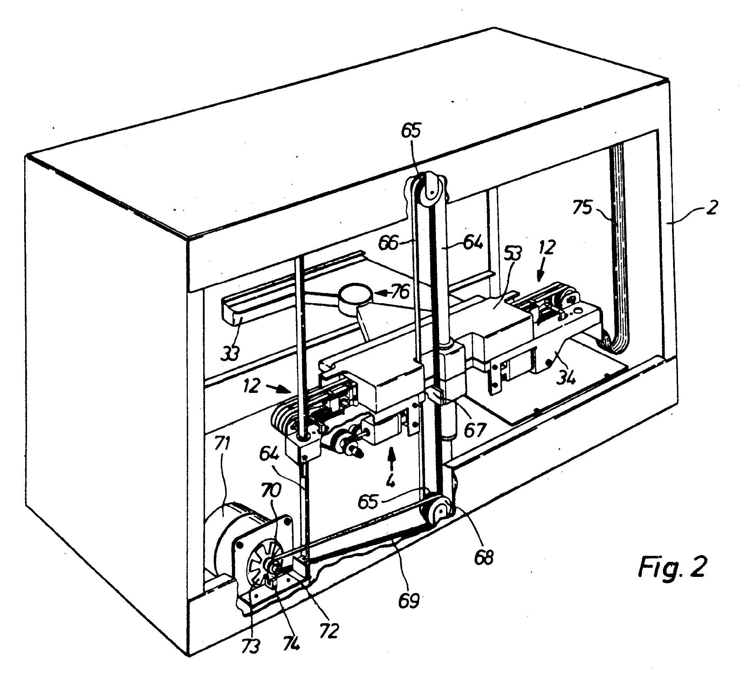

Fig. 2 eine Rückansicht des Plattenabspielgerätes nach Fig. 1 in vergrößerter Darstellung, jedoch der besseren Übersichtlichkeit wegen ohne die gegenüberliegenden Plattenspeichermagazine,

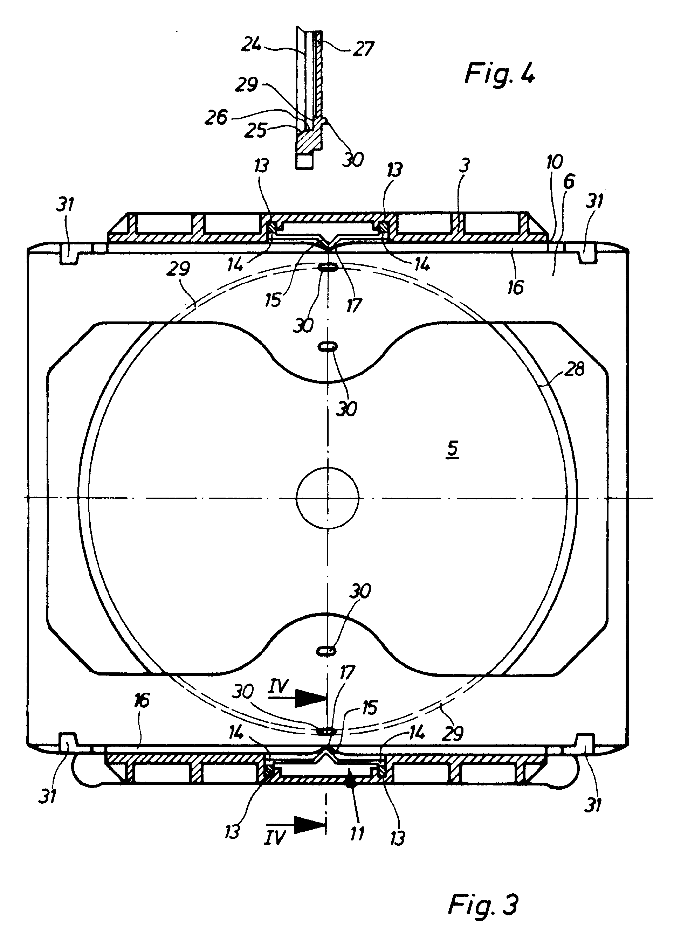

Fig. 3 einen Querschnitt in Unteransicht durch ein Plattenspeichermagazin des Plattenabspielgerätes nach Fig. 1 in vergrößerter Darstellung,

Fig. 4 einen Schnitt durch den Plattenhalter nach Fig. 3 gemäß der Linie IV-IV,

Fig. 5 eine Draufsicht auf den hinteren Teil der Transporteinrichtung des Plattenabspielgerätes nach Fig. 1 im vergrößerten Maßstab und Weglassung des mittleren Bereiches und des Oberteiles der Transporteinrichtung,

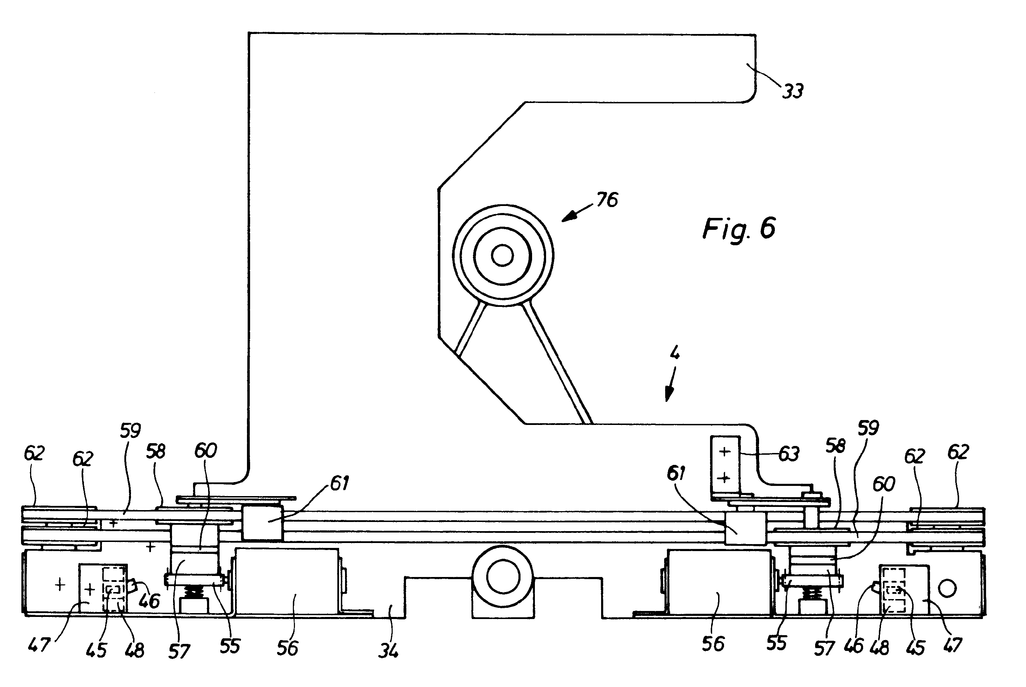

Fig. 6 eine Unteransicht der Transporteinrichtung des Plattenabspielgerätes nach Fig. 1 in vergrößerter Darstellung,

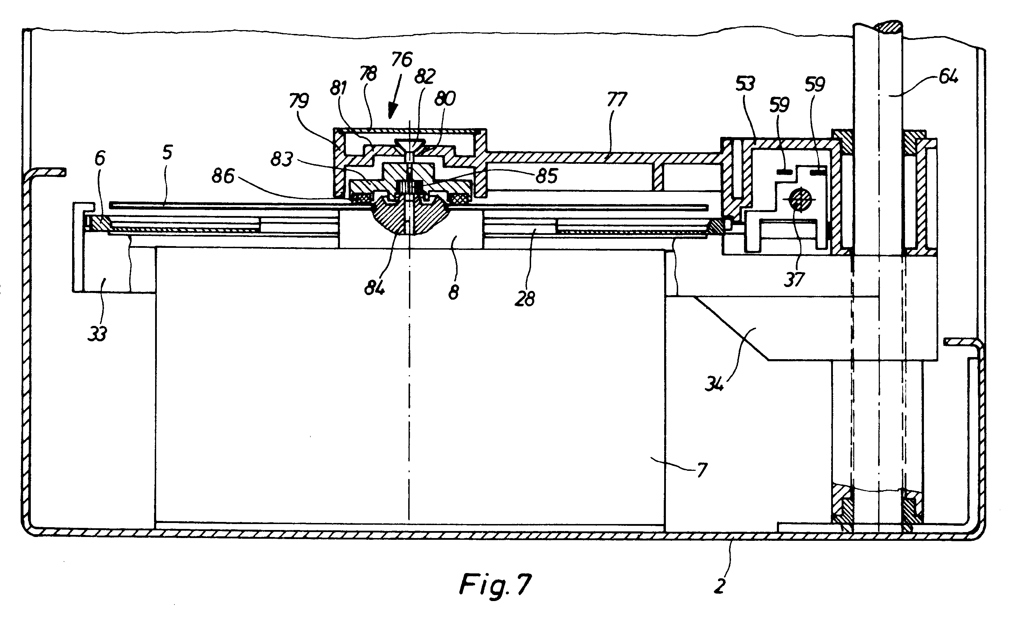

Fig. 7 eine Ansicht der Transporteinrichtung und der Abspieleinheit des Plattenabspielgerätes nach Fig. 1 im vergrößerten Maßstab und teilweise im Schnitt beim Abspielen einer Platte,

Fig. 8 eine Ansicht einer alternativen Ausführungsform des Plattenandrückers der Transporteinrichtung nach Fig. 7 im vergrößerten Maßstab und in der Ruhestellung,

Fig. 9 eine Teilunteransicht des Plattenandrückers nach Fig. 8,

Fig. 10 eine Ansicht des Plattenandrückers nach Fig. 8 in der Arbeitsstellung und

Fig. 11 eine perspektivische Ansicht des Plattenabspielgerätes nach Fig. 1 mit einer Schublade für die Aufnahme eines einzelnen Plattenhalters mit eingelegter Platte.

Das Plattenabspielgerät 1, durch das auf den Platten gespeicherte Informationen beispielsweise optisch ausgelesen und wiedergegeben werden können, besitzt ein Gehäuse 2 mit einer zugeordneten, nicht dargestellten Bedienungstafel, die verschiedene Tasten aufweist, beispielsweise eine Plattenauswahltaste, eine Plattenabspieltaste und eine Stopptaste. Seitlich im Gehäuse 2 sind gegenüberliegend Plattenspeichermagazine 3 angeordnet. In dem Raum zwischen den Plattenspeichermagazinen 3 befindet sich eine auf- und abverfahrbare Transporteinrichtung 4 für einen eine Platte 5 aufnehmenden Plattenhalter 6. Eine Abspieleinheit 7 mit einem Plattenteller 8, einem nicht dargestellten Motor zur Drehung des Plattentellers 8, und einem Ab-

5

spielkopf 9 ist feststehend zwischen und unterhalb der beiden gegenüberliegenden Plattenspeichermagazine 3 angebracht.

Die Plattenspeichermagazine 3 sind untereinander identisch aufgebaut und besitzen jeweils eine Vielzahl übereinanderliegend angeordneter Aufnahmefächer 10 für die Lagerung einer entsprechenden Anzahl an je eine Platte 5 aufnehmender Plattenhalterungen 6. In dem Aufnahmefach 10 ist der Plattenhalter 6 durch zwei gegenüberliegende, am Plattenspeichermagazin 3 angebrachte Federelement 11 in seiner Lage gesichert. In dieser Lage steht der Plattenhalter 6 soweit über den beiden möglichen Auszugseiten des Plattenspeichermagazins 3 über, daß er von einer Auszugeinrichtung 12 der Transporteinrichtung 4 erfaßt werden kann. An den gegenüberliegenden Innenseiten des Plattenspeichermagazins 3 befinden sich jeweils zwei Führungsnuten 13, in die die Schenkel der als U-förmige Bügel ausgebildeten Federelemente 11 eingreifen. Der Steg eines jeden Federelementes 11 besitzt mittig eine in das Innere des Aufnahmefaches 10 vorstehende Sicke 15, welche in einen mittig an der entsprechenden Längsseite 16 des Plattenhalters 6 liegenden Einschnitt 17 eingreift. Um die Herstellung und die Montage der Federelemente zu erleichtern, sind die Federelemente 11 auf jeder Seite der Aufnahmefächer 10 unter Verbindung im Bereich ihrer Schenkel 14 zu einem durchgehenden Band zusammengefaßt.

Jedes Plattenspeichermagazin 3 ist in seiner feststehenden Position über zwei an der Vorderseite 18 des Gehäuses 2 angebrachte Verriegelungen 19, 20, die jeweils aus einem oben und einem unten liegenden Schnappmechanismus bestehen, gehalten. Beide Verriegelungen 19, 20 sind über ein nicht dargestelltes Gestänge mit einem Verschiebehebel 21 verbunden. Bei einer Bewegung des Verschiebehebels 21 in Richtung auf das Plattenspeichermagazin 3 löst sich die erste Verriegelung 19, so daß das Plattenspeichermagazin 3 um die Schwenkachse 22 herum nach außerhalb des Gehäuses 2 verschwenkt werden kann, um so das Auswechseln der in den Plattenhaltern 6 gespeicherten Platten 5 zu erleichtern. Bei einer Bewegung des Verschiebehebels 21 von dem Plattenspeichermagazin 3 weg wird auch die zweite Verriegelung 20 gelöst, wodurch das Plattenspeichermagazin 3 insgesamt aus dem Gehäuse 2 entnommen werden kann. Selbstverständlich muß sich sowohl beim Ausschwenken als auch bei der Herausnahme des Plattenspeichermagazins 3 die Transporteinrichtung 4 in ihrer Endposition unterhalb des Bodens 23 des Plattenspeichermagazins 3 befinden.

Der Plattenhalter 6 besitzt an seiner oberen Seite eine zentrale Ausnehmung 24 zur Aufnahme der Platte 5. Die Ausnehmung 24 weist einen abgeschrägten Randbereich 25 auf, der in einen vertikalen Randbereich 26 übergeht. Der Durchmesser des vertikalen Randbereiches 26 der Ausnehmung 24 ist dabei etwas größer als der Durchmesser der Platte 5. In den Boden 27 der Ausnehmung 24 ist eine Öffnung 28 eingelassen, in die einerseits der Plattenteller 8 von unten eingeführt wird, um die Platte 5 drehen zu können, und durch die andererseits der Lichtstrahl des Abspielkopfes 9 die Platte 5 abtastet. Zur Auflage der Platte 5 in ihrem keine gespeicherten Daten tragenden Randbereich dient eine am Boden 27 der Ausnehmung 24 vorgesehene Randschulter 29, die aufgrund der Öffnung 28 in zwei gegenüberliegende Segmente unterteilt ist. An der Unterseite des Bodens 27 befinden sich in der Ebene der gegenüberliegenden Einschnitte 17 für die Aufnahme der Federelemente 11 mehrere nebeneinanderliegende Noppen 30. Diese Noppen 30 verhindern ein Herausfallen der auf dem darunterliegenden Plattenhalter aufliegende Platte 5 bei einer Schräglage des Plattenspeichermagazins 3. Um die korrekte Lage des Plattenhalters 6 im Aufnahmefach 10 kontrollieren zu können, kann einer der Noppen 30 ein am Plattenspeichermagazin 3 befestigter Schaltkontakt zugeordnet sein.

Der Plattenhalter 6 weist an seinen Längsseiten 16 jeweils im vorderen Bereich unterseitig eine Ausnehmung 31 auf. In eine dieser Ausnehmungen 31 kann entsprechend der Zuordnung der Transporteinrichtung 4 zu dem Plattenspeichermagazin 3 und der Einschublage des Plattenhalters 6 in das Aufnahmefach 10 ein Greifarm 32 der Auszugeinrichtung 12 der Transporteinrichtung 4 eingreifen, um den Plattenhalter 6 auf einen U-förmigen Tragarm 33 am Unterteil 34 der Transporteinrichtung 4 zu befördern. Der Greifarm 32 ist in einem Schlitten 35 ein- und ausfahrbar gelagert, wobei der Schlitten 35 auf einer sich zwischen zwei Anschlagwinkeln 36 erstreckenden Tragstange 37 mittels eines Riementriebes 38 hin- und herbeweglich ist. In der Ausgangsstellung liegt der Schlitten 35 an dem Anschlagwinkel 36 an und der Greifarm 32 ist dabei durch einen an dem Unterteil 34 angelenkten, federbelasteten Winkelhebel 39 in seiner eingefahrenen Stellung im Schlitten 35 gehalten. Hierbei greift der eine Arm 40 des Winkelhebels 39 mit seinem freien Ende in eine entsprechende Ausnehmung 41 im Greifarm 32 ein. Der andere Arm 42 des Winkelhebels 39 ist mit einer Zugfeder 43, die an einem an dem Unterteil 34 angebrachten Stift 44 befestigt ist, verbunden. Der Arm 42 besitzt endseitig eine Abwinkelung 45, die durch eine Öffnung 46 im Unterteil 34 mit einer auf der Unterseite des Unterteils 34 auf einer Leiterplatte 47 angebrachten Lichtschranke 48 zusammenwirkt, um die Ausgangsstellung des Schlittens 35 zu kontrollieren. Des weiteren ist an dem Arm 42 ein Anschlaghebel 49 angelenkt, der über eine Stift-Langloch-Verbindung 50 so geführt ist, daß sein freies Ende bei einer Bewegung des Schlittens 35 in Richtung auf den Anschlagwinkel 36 an dem Schlitten 35 zur Anlage kommt und dadurch der Winkelhebel entgegen der Kraft der Zugfeder 43 verschwenkt wird, wodurch der Arm 40 in die Ausnehmung 41 des Greifarms 32 eingeführt wird und den Greifarm 32 in seine eingefahrene Stellung im Schlitten 35 zurückbringt. Bei einer Bewegung des Schlittens aus seiner Ausgangsstellung von dem Anschlagwinkel 36 weg verschwenkt sich der Winkelhebel 39 aufgrund der Kraft der Zugfeder 43, wodurch der Greifarm 32 über den Arm 40 des Winkelhebels 39 aus dem Schlitten 35 herausgefahren wird und mit der ihm gegenüberliegenden Ausnehmung 31 des Plattenhalters 6 in Eingriff kommt. Kurz vor der Freigabe des Greifarms 32 durch den Arm 40 des Winkelhebels 39 kommt die Rückseite 51 des Greifarms 32 an einem Anschlag zur Anlage, um ein Herausgleiten des Greifarms 32 aus seiner ausgefahrenen Stellung zu verhindern. Dieser Anschlag ist durch eine Wand 52 des Oberteils 53 der Transporteinrichtung 4 und durch jeweils einen endseitig neben dieser Wand 52 liegenden, an dem Unterteil 34 der Transporteinrichtung 4 befestigten Rundstift 54 gebildet.

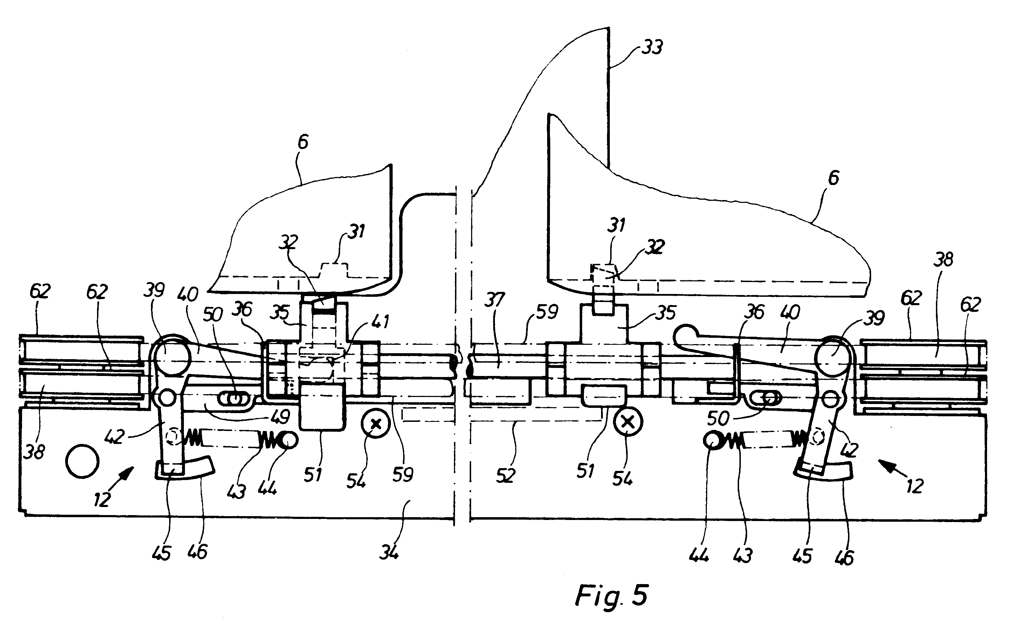

Zu dem Riementrieb 38 für die Bewegung des Schlittens 35 gehört ein Schneckengetriebe 55 und ein drehrichtungsumkehrbarer Motor 56. Das Schneckenrad des Schneckengetriebes 55 ist mit einem zylinderförmigen Ansatz 57 des Antriebsrades 58 für den Zahnriemen 59 des Riementriebes 38 verbunden. In den Ansatz 57 des Antriebsrades 58 ist eine Rutschkupplung 60 eingebaut. In der Nähe des Antriebsrades 58 befindet sich eine Spannrolle 61 für den Zahnriemen 59, der über endseitig an der Transporteinrichtung 4 angebrachte Umlenkrollen 62 geführt und an dem Schlitten 35 befestigt ist. Der Schlitten 35, der zu der linken Auszugeinrichtung 12 (vergl. Fig. 5) gehört, ist mit dem hinteren Zahnriemen 59 verbunden, während der Schlitten 35 der rechts liegenden Auszugeinrichtung 12 an dem vorderen Zahnriemen 59 befestigt ist. Bei der Herausnahme eines Plattenhalters 6 aus einem Aufnahmefach 10 mittels des Schlittens 35 der einen Auszugeinrichtung 12 dient der Schlitten 35 der anderen Auszugeinrichtung 12 in der Endlage des Plattenhalters 6 auf dem U-förmigen Tragarm 33, der Transporteinrichtung 4, in der die in dem Plattenhalter 6 gespeicherte Platte 5 konzentrisch zu dem Plattenteller 8 der Abspieleinheit 7 ausgerichtet ist, als Anschlag. Zur Überwachung dieser konzentrischen Lage der Platte 5 ist an dem Tragarm 33 eine Lichtschranke 63 vorgesehen, die mit einer im Plattenhalter 6 entsprechend angebrachten Lichtdurchtrittsöffnung zusammenarbeitet.

An der Rückseite des Gehäuses 2 befinden sich zwei parallel zueinander und vertikal verlaufende Führungsstangen 64, auf denen die Transporteinrichtung 4 gleitbeweglich gelagert ist. Der mittig zum Gehäuse 2 angeordneten Führungsstange 64 ist ein parallel dazu verlaufender, über Umlenkrollen 65 geführter Zahnriemen 66 zugeordnet, der über eine Klemmhalterung 67 mit der Transporteinrichtung 4 verbunden ist. Die untere Umlenkrolle 65 für den Zahnriemen 66 ist mit einer weiteren Umlenkrolle 68 für einen Zahnriemen 69 gekoppelt, der mit dem Antriebsrad 70 eines drehrichtungsumkehrbaren Antriebsmotors 71 verbunden ist. Die Achse 72 des Antriebsmotors 71 trägt des weiteren ein Flügelrad 73, dessen Flügel in der Gabel eines Positionierimpulse erzeugenden Gabelkopplers 74 laufen. Mit Hilfe der Positionierimpulse kann eine exakte Zuordnung der Transporteinrichtung 4 zu den Aufnahmefächern 10 der Plattenspeichermagazine 3 erreicht werden. Im übrigen ist die Transporteinrichtung 4 über ein flexibles Leitungskabel 75 mit der nicht dargestellten Steuereinrichtung des Plattenabspielgerätes verbunden.

Am Oberteil 53 der Transporteinrichtung 4 befindet sich der Plattenandrücker 76. Von dem Oberteil 53 aus erstreckt sich ein parallel zu dem Tragarm 33 der Transporteinrichtung 4 verlaufender Haltearm 77, der an seinem freien Ende mit einem durch einen Deckel 78 verschlossenen Haltekopf 79 versehen ist. In einer konischen Aufnahmeöffnung 80 einer Zwischenwand 81 des Haltekopfes 79 ist ein Konus 82 längsverschieblich und frei pendelnd gelagert, der mit einem Plattenandrück-Einsatz 83 innerhalb des Haltekopfes 79 verbunden ist. Mittig trägt der Plattenandrück-Einsatz 83 einen mit der magnetisierbaren Antriebsachse des Plattentellers 8 der Abspieleinheit 7 zusammenwirkenden Magneten 85. An der der Platte 5 zugewandten Seite besitzt der Plattenandrück-Einsatz 83 randseitig einen umlaufenden Gummi-Flachring 86, der aufgrund der Kraftwirkung zwischen dem Magneten 85 und der Antriebsachse 84 in der Endposition der Transporteinrichtung 4, in der der unterhalb des Plattentellers 8 liegende Plattenhalter 6 die von ihm gespeicherte Platte 5 freigegeben hat, diese Platte 5 auf den Plattenteller 8 drückt.

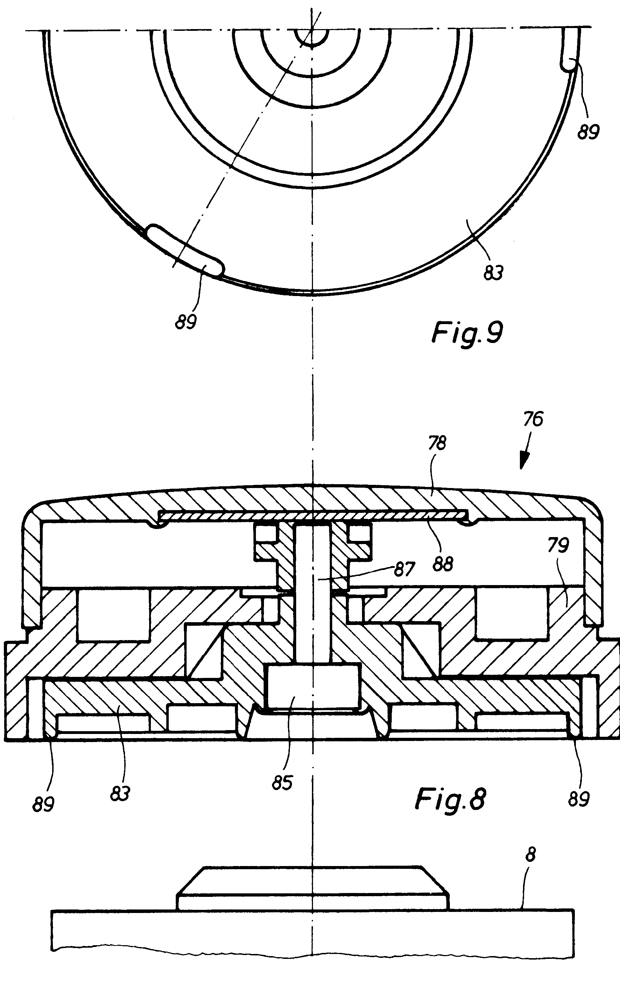

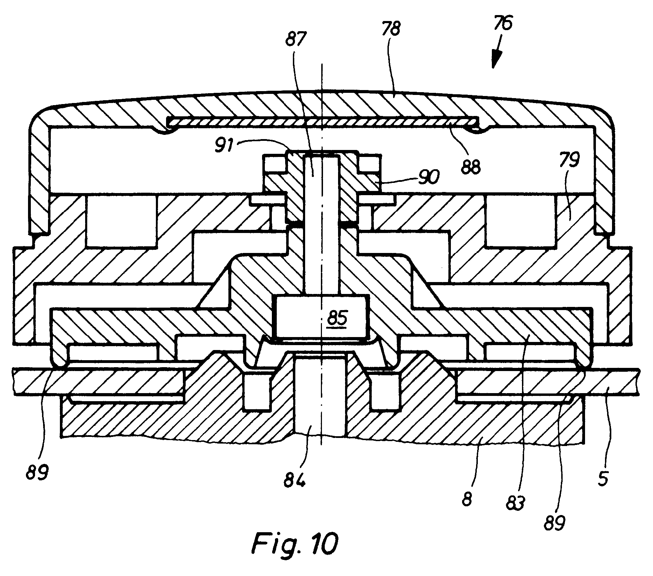

Bei der in den Fig. 8 bis 10 veranschaulichten alternativen Ausführung des Plattenandrückers 76 nimmt der Haltekopf 79 den Plattenandrück-Einsatz 83 längsverschieblich mit relativ großem seitlichem Spiel auf. Auf den mittig in dem Plattenandrück-Einsatz 83 angebrachten Magneten 85 liegt ein magnetisierbarer Stahlstab 87 auf, der sich in der Ruhestellung des Plattenandrück-Einsatzes 83 bis kurz unterhalb des Deckels 78 des Haltekopfes 79 erstreckt. In die Unterseite des Deckels 78 ist eine magnetisierbare Stahlplatte 88 eingeklipst, die über den Stahlstab 87 mit dem Magneten 85 zusammenwirkt und so den Plattenandrück-Einsatz 83 innerhalb des Haltekopfes 79 in seiner Ruhestellung hält. Wenn nun die Transporteinrichtung 4 mit dem Plattenandrücker 76 in ihre Endposition über den Plattenteller 8 hinausfährt, dann wird der magnetische Schluß zwischen dem Magneten 85 und der magnetisierbaren Antriebsachse 84 des Plattentellers 8 größer als der magnetische Schluß zwischen dem Magneten 85 bzw. dem magnetisierbaren Stahlstab 87 und der magnetisierbaren Stahlplatte 88, wodurch der Plattenandrück-Einsatz 83 sich nach unten aus dem Haltekopf 79 heraus verschiebt und mit drei an seiner Unterseite um 120° zueinander versetzt angeordneten Noppen 89 die Platte 5 auf den Plattenteller 8 drückt. Sobald der Plattenandrücker 76 aus dieser Arbeitsstellung wieder herausgefahren wird, geht der Plattenandrück-Einsatz 83 aufgrund des magnetischen Flusses zwischen dem Magnet 85 bzw. dem Stahlstab 87 und der Stahlplatte 88 in seine Ruhestellung zurück. Eine auf dem Stahlstab 87 aufgesetzte, mit einem Ringflansch 90 versehene Hülse 91 verhindert ein Herausziehen des Plattenandrück-Einsatzes 83 aus dem Haltekopf 79.

Das Plattenabspielgerät 1, dessen sämtliche Bewegungsabläufe durch eine nicht dargestellte Steuereinrichtung kontrolliert werden, arbeitet folgendermaßen: Ist beispielsweise eine im rechten Plattenspeichermagazin 3 aufbewahrte Platte 5 mittels der Tastatur auf der Bedienungstafel ausgewählt worden, dann fährt die Transporteinrichtung 4 auf eine Höhe, die mit der Höhe des Aufnahmefaches 10 des Plattenspeichermagazins 3 übereinstimmt, in welchem der Plattenhalter 6 mit der ausgewählten Platte 5 liegt. Dann wird die dem Plattenspeichermagazin 3 zugewandte Auszugeinrichtung 12 der Transporteinrichtung 4 in Tätigkeit gesetzt, wodurch zunächst der Greifarm 32 des Schlittens 35 in die ihm zugewandte Ausnehmung 31 des Plattenhalters 6 eingreift und anschließend durch die Bewegung des Schlittens 35 bis zu seinem Anschlag an dem anderen Schlitten 35 der Plattenhalter 6 mit der Platte 5 von dem Aufnahmefach 10 auf den Tragarm 33 der Transporteinrichtung 4 befördert wird. Sobald der Plattenhalter 6 seine endgültige Lage auf dem Tragarm 33 eingenommen hat, in der die Platte 5 konzentrisch zu dem Plattenteller 8 der Abspieleinheit 7 liegt, bewegt sich die Transporteinrichtung 4 in Richtung der Abspieleinheit 7. Beim Aufsetzen des Plattenhalters 6 auf die Abspieleinheit 7 wird der Plattenteller 8 der Abspieleinheit 7 durch die Öffnung 28 hindurch in den Plattenhalter 6 eingeführt, so daß unter Freigabe der Platte 5 aus dem Plattenhalter 6 der Zentralbereich der Platte 5 auf dem Plattenteller 8 zur Auflage kommt. Gleichzeitig wird in dieser Endposition der Transporteinrichtung 4 der Gummi-Flachring 86 des Plattenandrück-Einsatzes 83 des Plattenandrückers 76 aufgrund der Anziehungskraft zwischen dem Magneten 85 und der Antriebsachse 84 des Plattentellers 8 gegen die Oberseite der Platte 5 gedrückt, wobei sich der Konus 82 des Plattenandrück-Einsatzes 83 aus der Aufnahmeöffnung 80 der Zwischenwand 81 des Haltekopfes 79 nach oben verschiebt. Dann wird der Plattenteller 8 der Abspieleinheit 7 in Drehung versetzt, wodurch über den Abspielkopf 9 die auf der Platte 5 gespeicherte Information auf optischem Wege ausgelesen und anschließend wiedergegeben werden kann, z.B. in Form von Musik. Nach Beendigung der Informationsauslesung von der Platte 5 wird diese in analoger Weise von der Transporteinrichtung 4 in ihr zugehöriges Aufnahmefach 10 zurückbefördert. Dann fährt die Transporteinrichtung leer in ihre Endposition über die Abspieleinheit 7.

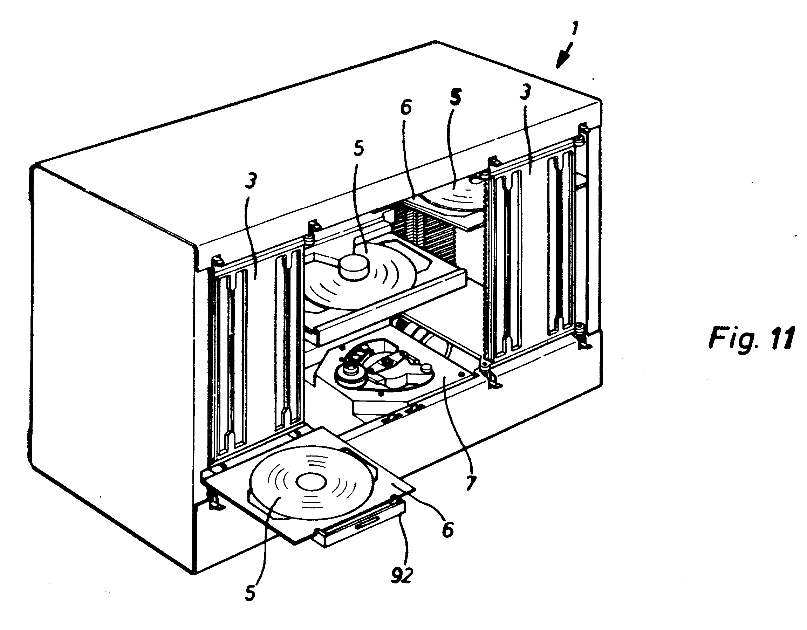

Bei dem in Fig. 11 dargestellten Plattenabspielgerät 1 ist das linke Plattenspeichermagazin 3 an seinem unteren Ende um die Höhe einer in das Plattenabspielgerät 1 ein- und ausfahrbaren Schublade 92 verkürzt. Die Schublade 92 nimmt einen mit einer Platte 5 bestückten Plattenhalter 6 auf, der im eingeschobenen Zustand der Schublade 92 von der Transporteinrichtung 4 erfaßt werden kann. Der Plattenhalter 6 steht zu diesem Zweck seitlich über die Schublade 92 vor. Im herausgezogenen Zustand der Schublade 92 kann die Platte 5 leicht von Hand ausgewechselt werden.

Das beschriebene Ausführungsbeispiel zeigt die besonders einfache und praktisch zu handhabende Konstruktion des Plattenabspielgerätes, das sich unbeschadet seiner Einfachheit gleichwohl als besonders zuverlässig beim Betrieb erweist.

## Patentansprüche

1. Plattenabspielgerät (1) mit zwei einander gegenüberliegenden Plattenspeichermagazinen (3), die eine Vielzahl übereinanderliegend in Aufnahmefächern (10) gelagerter, jeweils eine Platte (5) aufnehmender Plattenhalter (6) aufweisen, und mit einer eine Auszugeinrichtung (12) mit einem Greifarm (22) umfassenden Transporteinrichtung (4), die in Stapelrichtung der Plattenspeichermagazine (3) bewegbar ist, um eine gewünschte Platte (5) mit dem zugehörigen Plattenhalter (6) zwischen dem Aufnahmefach (10) und einer Abspieleinheit (7) hin und her zu befördern, dadurch gekennzeichnet, daß die Transporteinrichtung (4) eine zweite, von der ersten unabhängig steuerbare Auszugeinrichtung (12) für die Plattenhalter (6) aufweist, wobei die beiden, auf der Transporteinrichtung (4) horizontal verfahrbaren Auszugeinrichtungen (12) sich jeweils in einer Bereitschaftsposition zur Herausnahme eines in dem zugeordneten Plattenspeichermagazin (3) vorhandenen Plattenhalters (6) für eine Platte (5) befinden, oder wobei die eine Auszugeinrichtung (12) in eine Mittenposition gefahren ist, in der sie die aus dem zugehörigen Plattenspeichermagazin (3) entnommene Platte (5) mit dem Plattenhalter (6) konzentrisch zu dem Plattenteller (8) der Abspieleinheit (7) fixiert, während die andere Auszugeinrichtung (12) in ihrer Bereitschaftsposition für das andere Plattenspeichermagazin (3) verbleibt.

2. Plattenabspielgerät nach Anspruch 1, dadurch gekennzeichnet, daß die eine Platte (5) mit dem Plattenhalter (6) tragende Transporteinrichtung (4) bei ihrer Abwärtsbewegung über die Abspieleinheit (7) hinaus in ihre Endposition die Platte (5) unter Abheben aus dem Plattenhalter (6) auf den Plattenteller (8) aufsetzt und mittels eines an der Transporteinrichtung (4) feststehend angeordneten Plattenandrückers (76) mit dem Plattenteller (8) verspannt.

3. Plattenabspielgerät nach dem Anspruch 1 oder 2, dadurch gekennzeichnet, daß mehrere Abspieleinheiten (7) mit jeweils zugehöriger Transporteinrichtung (4) unter Zwischenschaltung eines beidseitig offenen, durch benachbarte Transporteinrichtungen (4) zugänglichen Plattenspeichermagazins (3) in Reihe angeordnet sind, wobei an jedem Ende der Reihe ein weiteres Plattenspeichermagazin (3) vorgesehen ist.

4. Plattenabspielgerät nach einem oder mehreren der Ansprüche 1 bis 3, dadurch gekennzeichnet, daß jedes Plattenspeichermagazin (3) in seiner feststehenden Position mit dem Gehäuse (2) des Plattenabspielgerätes (1) verriegelt, nach Aufhebung einer ersten Verriegelung (19) um eine Schwenkachse (22) aus dem Gehäuse (2) herausschwenkbar und nach Lösung einer zweiten Verriegelung (20) aus dem Gehäuse (2) entnehmbar ist.

5. Plattenabspielgerät nach Anspruch 4, dadurch gekennzeichnet, daß die beiden Verriegelungen (19, 20) des Plattenspeichermagazins (3) über ein Gestänge derart mit einem Verschiebehebel (21) verbunden sind, daß das Plattenspeichermagazin (3) bei einer Bewegung des Verschiebehebels (21) in der einen Richtung zum Ausschwenken und in der anderen Richtung zur Herausnahme entriegelt ist.

6. Plattenabspielgerät nach einem oder mehreren der Ansprüche 1 bis 5, dadurch gekennzeichnet, daß jeder Plattenhalter (6) durch zwei gegenüberliegende, am Plattenspeichermagazin (3) angebrachte Federelemente (11) in einer gesicherten Lage im Aufnahmefach (10) positioniert ist, in der der Plattenhalter (6) soweit über das Plattenspeichermagazin (3) vorsteht, daß er von der zugehörigen Auszugeinrichtung (12) der Transporteinrichtung (4) erfaßbar ist.

7. Plattenabspielgerät nach Anspruch 6, dadurch gekennzeichnet, daß jedes Federelement (11) aus einem U-förmigen Bügel besteht, dessen Schenkel (14) in Führungsnuten (13) am Plattenspeichermagazin (3) eingreifen und dessen Steg mittig eine Sicke (15) aufweist, die in einen an der entsprechenden Längsseite (16) des Plattenhalters (6) liegenden Einschnitt (17) eingreift.

8. Plattenabspielgerät nach Anspruch 7, dadurch gekennzeichnet, daß die jeweils auf einer Seite den Aufnahmefächern (10) zugeordneten Federelemente (11) unter Verbindung im Bereich ihrer Schenkel (14) zu einem durchgehenden Band zusammengefaßt sind.

9. Plattenabspielgerät nach einem oder mehreren der Ansprüche 1 bis 8, dadurch gekennzeichnet, daß der Plattenhalter (6) auf seiner Unterseite in der Ebene der gegenüberliegenden Einschnitte (17) mehrere Noppen (30) aufweist, die ein Herausfallen der auf dem darunterliegenden Plattenhalter (6) aufliegenden Platte (5) verhindern.

10. Plattenabspielgerät nach Anspruch 9, dadurch gekennzeichnet, daß eine der Noppen (30) mit einem Schaltkontakt zur Feststellung des Vorhandenseins einer Platte (5) im Aufnahmefach (10) zusammenwirkt.

11. Plattenabspielgerät nach einem oder mehreren der Ansprüche 1 bis 10, dadurch gekennzeichnet, daß der Plattenhalter (6) eine die Platte (5) aufnehmende Ausnehmung (24) mit einem abgeschrägten Randbereich (25), der in einen vertikalen Randbereich (26) übergeht, und im Boden (27) der Ausnehmung (24) eine Öffnung (28) aufweist, in die der Plattenteller (8) der Abspieleinheit (7) einführbar ist, und daß der Boden (27) der Ausnehmung (24) eine in zwei gegenüberliegende Segmente aufgeteilte Randschulter (29) zur Unterstützung der Platte (5) in ihrem keine gespeicherten Daten tragenden Randbereich besitzt.

12. Plattenabspielgerät nach einem oder mehreren der Ansprüche 1 bis 11, dadurch gekennzeichnet, daß der Plattenhalter (6) an seinen Längsseiten (16) jeweils im vorderen Bereich unterseitig eine Ausnehmung (31) besitzt, und daß entsprechend der Lage des Plattenhalters (6) im Aufnahmefach (10) der Greifarm (32) der Auszugeinrichtung (12) der Transporteinrichtung (4) mit einer dieser Ausnehmungen (31) in Eingriff bringbar ist.

13. Plattenabspielgerät nach Anspruch 12, dadurch gekennzeichnet, daß der Greifarm (32) in einem hin- und herbeweglichen Schlitten (35) ein- und ausfahrbar gelagert ist und in der Ausgangsstellung des Schlittens (35) durch einen federbelasteten Winkelhebel (39) mit zugeordnetem Anschlaghebel (49) in seiner eingefahrenen Stellung derart gehalten ist, daß er bei einer Bewegung des Schlittens (35) aus der Ausgangsstellung von dem Winkelhebel (39) in die ausgefahrene, in die Ausnehmung (31) des Plattenhalters (6) eingreifende Stellung bringbar ist und anschließend durch einen feststehenden, an seiner Rückseite (51) anliegenden Anschlag in dieser Stellung verbleibt.

14. Plattenabspielgerät nach Anspruch 13, dadurch gekennzeichnet, daß der Winkelhebel (39) bei der Bewegung des Schlittens (35) in die von einem Anschlagwinkel (36) begrenzte Ausgangsstellung durch den an dem Winkelhebel (39) angelenkten Anschlaghebel (49) derart verschwenkbar ist, daß er unter Eingriff in eine entsprechende Ausnehmung (41) im Greifarm (32) diesen in seine eingefahrene Stellung im Schlitten (35) zurückzieht.

15. Plattenabspielgerät nach den Ansprüchen 13 und 14, dadurch gekennzeichnet, daß dem Winkelhebel (39) eine Lichtschranke (48) zur Feststellung der Ausgangsstellung des Schlittens (35) zugeordnet ist.

16. Plattenabspielgerät nach Anspruch 13, dadurch gekennzeichnet, daß der Anschlag für die Rückseite (51) des Greifarms (32) durch eine Wand (52) des Oberteils (53) der Transporteinrichtung (4) und durch jeweils einen endseitig neben dieser Wand (52) liegenden, an dem Unterteil (34) der Transporteinrichtung (4) befestigten Rundstift (54) gebildet ist.

17. Plattenabspielgerät nach einem oder mehreren der Ansprüche 13 bis 16. dadurch gekennzeichnet, daß die auf einer Tragstange (37) gleitbeweglich geführten Schlitten (35) der Auszugeinrichtungen (12) jeweils über einen Riementrieb (38) mit Schneckengetriebe (55) und drehrichtungsumkehrbaren Motor (56) antreibbar sind.

18. Plattenabspielgerät nach einem oder mehreren der Ansprüche 1 bis 17, dadurch gekennzeichnet, daß zwischen dem Schneckengetriebe (55) und dem Antriebsrad (58) des Zahnriemens (59) des Riementriebes (38) eine Rutschkupplung (60) vorgesehen ist.

19. Plattenabspielgerät nach einem oder mehreren der Ansprüche 1 bis 18, dadurch gekennzeichnet, daß bei der Herausnahme eines Plattenhalters (6) aus einem Aufnahmefach (10) mittels des Schlittens (35) der einen Auszugeinrichtung (12) der Schlitten (35) der anderen Auszugeinrichtung (12) in der Endlage des Plattenhalters (6) auf einem U-förmigen Tragarm (33) der Transporteinrichtung (4) als Anschlag dient.

20. Plattenabspielgerät nach einem oder mehreren der Ansprüche 1 bis 19, dadurch gekennzeichnet, daß dem Tragarm (33) der Transporteinrichtung (4) eine Lichtschranke (63) zur Überwachung der konzentrischen Lage der im Plattenhalter (6) gespeicherten Platte (5) zu dem Plattenteller (8) der Abspieleinheit (7) zugeordnet ist, wobei der Plattenhalter (6) eine entsprechend angebrachte Lichtdurchtrittsöffnung aufweist.

21. Plattenabspielgerät nach einem oder mehreren der Ansprüche 1 bis 19, dadurch gekennzeichnet, daß dem Tragarm (33) der Transporteinrichtung (4) endseitig jeweils eine Lichtschranke zur Überwachung der konzentrischen Lage der im Plattenhalter (6) gespeicherten Platte (5) zu dem Plattenteller (8) der Abspieleinheit (7) zugeordnet ist.

22. Plattenabspielgerät nach einem oder mehreren der Ansprüche 1 bis 21, dadurch gekennzeichnet, daß die Transporteinrichtung (4) auf zwei an der Rückseite des Gehäuses (2) angebrachten, vertikal verlaufenden Führungsstangen (64) gleitbeweglich gelagert und über einen doppelten Riemenantrieb (66, 69) mit drehrichtungsumkehrbaren Antriebsmotor (71) auf- und abwärtsbewegbar ist.

23. Plattenabspielgerät nach Anspruch 22, dadurch gekennzeichnet, daß der als Schrittmotor ausgebildete Antriebsmotor (71) auf seiner Achse (72) ein Flügelrad (73) trägt, das in der Gabel eines Positionierimpulse erzeugenden Gabelkopplers (74) läuft.

24. Plattenabspielgerät nach Anspruch 2, dadurch gekennzeichnet, daß der Plattenandrücker (76) einen feststehenden, parallel zum Tragarm (33) der Transporteinrichtung (4) verlaufenden Haltearm (77) mit einem Haltekopf (79), in dem längsverschieblich und freipendelnd ein Plattenandrück-Einsatz (83) mit einem mittig angeordneten Magneten (85) gelagert ist, umfaßt, wobei der Magnet (85) mit der magnetisierbaren Antriebachse (84) des Plattentellers (8) der Abspieleinheit (7) zusammenwirkt.

25. Plattenabspielgerät nach Anspruch 24, dadurch gekennzeichnet, daß der Plattenandrück-Einsatz (83) des Haltekopfes (79) randseitig einen umlaufenden Gummi-Flachring (86) besitzt, der aufgrund der Kraftwirkung zwischen dem Magneten (85) und der Antriebsachse (84) des Plattentellers (8) in der Endposition der Transporteinrichtung (4) die Platte (5) auf den Plattenteller (8) drückt.

26. Plattenabspielgerät nach dem Anspruch 24 oder 25, dadurch gekennzeichnet, daß der Plattenandrück-Einsatz (83) über einen mit ihm verbundenen Konus (82) in einer dazu korrespondierenden Aufnahmeöffnung (80) einer Zwischenwand (81) des Haltekopfes (79) gelagert ist.

27. Plattenabspielgerät nach Anspruch 2, dadurch gekennzeichnet, daß der Plattenandrücker (76) einen feststehenden, parallel zum Tragarm (33) der Transporteinrichtung (4) verlaufenden Haltearm (77) mit einem Haltekopf (79) aufweist, in dem längsverschieblich mit relativ großem seitlichen Spiel ein Plattenandrück-Einsatz (83) mit einem mittig angeordneten Magneten 85 gelagert ist, der in der Ruhestellung des Plattenandrück-Einsatzes (83) mit einer in den Haltekopf (79) eingesetzten magnetisierbaren Stahlplatte (88) und in der Arbeitsstellung des Plattenandrück-Einsatzes (83) mit der magnetisierbaren Antriebsachse (84) des Plattentellers (8) der Abspieleinheit (7) zusammenwirkt.

28. Plattenabspielgerät nach Anspruch 27, dadurch gekennzeichnet, daß die magnetisierbare Stahlplatte (88) in die Unterseite des Deckels (78) des Haltekopfes (79) eingeklipst ist und über einen in den Plattenabdrück-Einsatz (83) eingesetzten magnetisierbaren Stahlstab (87) mit dem Magneten (85) zusammenwirkt.

29. Plattenabspielgerät nach den Ansprüchen 27 und 28, dadurch gekennzeichnet, daß der Plattenandrück-Einsatz (83) an der Peripherie seiner Unterseite drei um 120° zueinander versetzt angeordnete, Noppen (89) aufweist, die aufgrund der Kraftwirkung zwischen dem Magneten (85) und der Antriebsachse (84) des Plattentellers (8) in der Endposition der Transporteinrichtung (4) die Platte (5) auf den Plattenteller (8) drücken.

30. Plattenabspielgerät nach einem oder mehreren der Ansprüche 1 bis 29, dadurch gekennzeichnet, daß einem Plattenspeichermagazin (3) eine einen Plattenhalter (6) mit einer eingelegten Platte (5) aufnehmende Schublade (92) derart zugeordnet ist, daß im eingeschobenen Zustand der Schublade (92) dieser Plattenhalter (6) mit der Platte (5) mittels der Transporteinrichtung (4) zu der Abspieleinheit (7) und von dieser wieder in die Schublade (92) beförderbar ist und im herausgezogenen Zustand der Schublade (92) die von dem Plattenhalter (6) getragene Platte (5) von Hand auswechselbar ist.

31. Plattenabspielgerät nach einem oder mehreren der Ansprüche 1 bis 30, dadurch gekennzeichnet, daß eine besondere Bedienungstaste vorgesehen ist, über die die Transporteinrichtung (4) aus ihrer unteren Endstellung in eine obere Endstellung und anschließend wieder in die untere Endstellung verfahrbar ist, wobei die Abspieleinheit (7) über eine weitere Bedienungstaste einschaltbar ist.

## Claims

1. Record player (1), having two record storage magazines (3), which are situated opposite each other and comprise a plurality of record holders (6), which are stacked one above the other in storage compartments (10) and each hold a record (5), and having a transport device (4), which includes an extractor (12) with a gripper arm (22) and is displaceable in the stacking direction of the record storage magazines (3) in order to convey to and fro a desired record (5), with the associated record holder (6), between the storage compartment (10) and a playing unit (7), characterised in that the transport device (4) comprises a second extractor(12) for the record holders (6), which is controllable independently of the first extractor, each of the two extractors (12), which are horizontally displaceable on the transport device (4), being in a stand-by position for the extraction of a record holder (6), situated in the associated record storage magazine (3), for a record (5), or one extractor (12) being moved into a central position, in which it secures the record (5), which is removed from the associated record storage magazine (3), together with the record holder (6) concentrically with respect to the turntable (8) of the playing unit (7), while the other extractor (12) remains in its stand-by position for the other record storage magazine (3).

2. Record player according to claim 1, characterised in that, during its downward movement beyond the playing unit (7) into its end position, the transport device (4), carrying a record (5) with the record holder (6), places the record (5) upon the turntable (8) whilst removing it from the record holder (6) and clamps it to the turntable (8) by means of a record pressing means (76) securely disposed on the transport device (4).

3. Record player according to claim 1 or 2, characterised in that a plurality of playing units (7) are disposed in a row, each with its associated transport device (4), by the interposition of a record storage magazine (3), which is open at each end and is accessible through adjacent transport devices (4), an additional record storage magazine (3) being provided at each end of the row.

4. Record player according to one or a plurality of claims 1 to 3, characterised in that each record storage magazine (3) is locked in its stationary position with the housing (2) of the record player (1); it is pivotable out of the housing (2) about a pivotal axis (22) after the release of a first locking means (19); and it is removable from the housing (2) after the release of a second locking means (20).

5. Record player according to claim 4, characterised in that the two locking means (19, 20) of the record storage magazine (3) are connected to a shift lever (21), through the intermediary of a rod assembly, in such a manner that the record storage magazine (3) is unlocked when the shift lever (21) moves in one direction for the outward pivotal movement and moves in the other direction for the extraction.

6. Record player according to one or a plurality of claims 1 to 5, characterised in that each record holder (6) is positioned, by means of two oppositely situated resilient elements (11) which are mounted on the record storage magazine (3), in a secured position in the storage compartment (10), in which position the record holder (6) protrudes so far beyond the record storage magazine (3) that it is engageable by the associated extractor (12) of the transport device (4).

7. Record player according to claim 6, characterised in that each resilient element (11) comprises a U-shaped bow, the leg members (14) of which engage in guide grooves (13) in the record storage magazine (3), and the cross-piece member of which is provided centrally with a channel (15), which engages in a notch (17) situated on the corresponding longitudinal end (16) of the record holder (6).

8. Record player according to claim 7, characterised in that the resilient elements (11), which are each associated with the respective storage compartments (10) on one side, are interconnected by a join in the region of their leg members (14) to form a continuous strip.

9. Record player according to one or a plurality of claims 1 to 8, characterised in that the record holder (6) is provided on its underside with a plurality of raised dots (30) in the plane of the oppositely situated notches (17), said dots preventing the record (5), which lies on the record holder (6) situated therebeneath, from falling out.

10. Record player according to claim 9, characterised in that one of the raised dots (30) co-operates with a switching contact to determine the presence of a record (5) in the storage compartment (10).

11. Record player according to one or a plurality of claims 1 to 10, characterised in that the record holder (6) is provided with a recess (24), which accommodates the record (5) and has an inclined edge region (25), which extends into a vertical edge region (26), and is provided with an opening (28) in the base (27) of the recess (24), the turntable (8) of the playing unit (7) being insertable into said opening, and in that the base (27) of the recess (24) has an edge shoulder (29), which is divided into two oppositely situated segments, to support the record (5) in its edge region, which does not carry any stored data.

12. Record player according to one or a plurality of claims 1 to 11, characterised in that the record holder (6) is provided, at each of its longitudinal ends (16), with a respective recess (31) in the front region of its underside, and in that the gripper arm (32) of the extractor (12) of the transport device (4) can be brought into engagement with one of these recesses (31) depending on the position of the record holder (6) in the storage compartment (10).

13. Record player according to claim 12, characterised in that the gripper arm (32) is mounted in a sliding carriage (35), which is displaceable to and fro, so as to be retractable and extendable and, when the sliding carriage (35) is in its initial position, the gripper arm is retained in its retracted position, by means of a spring-loaded toggle lever (39) with its associated stop lever (49), in such a manner that it can be brought into its extended position, which engages in the recess (31) in the record holder (6), when the sliding carriage (35) moves from its initial position by the toggle lever (39), and the gripper arm subsequently remains in this extended position by a fixed stop member, which abuts against its rear end (51).

14. Record player according to claim 13, characterised in that, when the sliding carriage (35) moves into its initial position, defined by a stop bracket (36), by means of the stop lever (49), which is pivotally mounted on the toggle lever (39), the toggle lever (39) is pivotable in such a manner that, by engaging in a corresponding recess (41) in the gripper arm (32), the toggle lever withdraws said arm into its retracted position in the sliding carriage (35).

15. Record player according to claims 13 and 14, characterised in that a light barrier (48) is associated with the toggle lever (39) to determine the initial position of the sliding carriage (35).

16. Record player according to claim 13, characterised in that the stop member for the rear end (51) of the gripper arm (32) is formed by a wall (52) of the upper portion (53) of the transport device (4) and formed by a respective round pin (54), which lies at one end adjacent this wall (52) and is secured to the lower portion (34) of the transport device (4).

17. Record player according to one or a plurality of claims 13 to 16, characterised in that the sliding carriages (35) of the extractors (12), which carriages are slidingly guided on a supporting rod (37), are each drivable by means of a respective belt drive (38) having a worm gear (55) and a motor (56) with a reversible direction of rotation.

18. Record player according to one or a plurality of claims 1 to 17, characterised In that a sliding coupling (60) is provided between the worm gear (55) and the drive wheel (58) of the toothed belt (59) of the belt drive (38).

19. Record player according to one or a plurality of claims 1 to 18, characterised in that, when a record holder (6) is extracted from a storage compartment (10) by means of the sliding carriage (35) of one extractor (12), the sliding carriage (35) of the other extractor (12) serves as a stop member on a U-shaped supporting arm (33) of the transport device (4) when the record holder (6) is in its end position.

20. Record player according to one or a plurality of claims 1 to 19, characterised in that a light barrier (63), for monitoring the concentric position of the record (5), which is stored in the record holder (6), with respect to the turntable (8) of the playing unit (7), is associated with the supporting arm (33) of the transport device (4), the record holder (6) having a correspondingly provided aperture for the light to pass therethrough.

21. Record player according to one or a plurality of claims 1 to 19, characterised in that a respective light barrier, for monitoring the concentric position of the record (5), which is stored in the record holder (6), with respect to the turntable (8) of the playing unit (7), is associated with the supporting arm (33) of the transport device (4) at its end face.

22. Record player according to one or a plurality of claims 1 to 21, characterised in that the transport device (4) is slidingly mounted on two vertically extending guide rods (64), which are mounted on the rear end of the housing (2), and it is upwardly and downwardly displaceable by means of a double belt drive (66, 69) having a driving motor (71) with a reversible direction of rotation.

23. Record player according to claim 22, characterised in that the driving motor (71), in the form of a stepping motor, carries on its axle (72) an impeller wheel (73), which travels in the fork of a bifurcated coupler (74), which produces positioning pulses.

24. Record player according to claim 2, characterised in that the record pressing means (76) includes a fixed retaining arm (77), which extends parallel to the supporting arm (33) of the transport device (4) and has a retaining head (79), in which a record pressing insert (83) is mounted by the use of a centrally disposed magnet (85) in a longitudinally displaceable and freely oscillating manner, the magnet (85) co-operating with the magnetisable drive shaft (84) of the turntable (8) of the playing unit (7).

25. Record player according to claim 24, characterised in that the record pressing insert (83) of the retaining head (79) is provided on its edge with a circumferential flat rubber ring (86), which forces the record (5) onto the turntable (8) due to the action of force between the magnet (85) and the drive shaft (84) of the turntable (8) when the transport device (4) is in its end position.

**26.** Record player according to claim 24 or 25, characterised in that the record pressing insert (83) is mounted, through the intermediary of a cone (82) connected to said insert, in a receiver opening (80) corresponding to said cone and formed in an intermediate wall (81) of the retaining head (79).

**27.** Record player according to claim 2, characterised in that the record pressing means (76) has a fixed retaining arm (77), which extends parallel to the supporting arm (33) of the transport device (4) and has a retaining head (79), in which a record pressing insert (83) is mounted so as to be longitudinally displaceable, with a relatively large lateral play, by the use of a centrally disposed magnet (85), which co-operates with a magnetisable steel plate (88), which is inserted into the retaining head (79), when the record pressing insert is in its position of rest, and co-operates with the magnetisable drive shaft (84) of the turntable (8) of the playing unit (7) when the record pressing insert (83) is in its operative position.

**28.** Record player according to claim 27, characterised in that the magnetisable steel plate (88) is clipped into the underside of the cover (78) of the retaining head (79) and cooperates with the magnet (85) through the intermediary of a magnetisable steel rod (87), which is inserted into the record pressing insert (83).

**29.** Record player according to claims 27 and 28, characterised in that the record pressing insert (83) is provided, on the periphery of its underside, with three raised dots (89), which are disposed so as to be offset from one another by 120 and push the record (5) onto the turntable (8) due to the action of force between the magnet (85) and the drive shaft (84) of the turntable (8) when the transport device (4) is in its end position.

**30.** Record player according to one or a plurality of claims 1 to 29, characterised in that a drawer (92), which accommodates a record holder (6) with a record (5) inserted therein, is associated with a record storage magazine (3) in such a manner that, when the drawer (92) is in its retracted state, this record holder (6) is conveyable, together with the record (5), to the playing unit (7) by means of the transport device (4) and from said playing unit into the drawer (92) again, and the record (5), which is carried by the record holder (6), is manually interchangeable when the drawer (92) is in its extended state.

**31.** Record player according to one or a plurality of claims 1 to 30, characterised in that a separate operating key is provided, through the intermediary of which the transport device (4) is displaceable from its lower end position into an upper end position and subsequently into the lower end position again, the playing unit (7) being able to be switched-on through the intermediary of an additional operating key.

**Revendications**

**1.** Tourne-disques (1) avec deux magasins de réserve de disques (3) opposés l'un à l'autre qui présentent une pluralité de supports de disques (6) logés superposés dans des cases de réception (10), recevant chacune un disque (5), et avec un dispositif de transport (4) comprenant un dispositif de retrait (12) avec un bras de saisie (22), qui est mobile dans le sens d'empilement du magasin de réserve de disques (3), afin de transporter dans les deux sens un disque souhaité (5) avec le support de disques (6) associé entre la case de réception (10) et une unité de lecture (7), caractérisé en ce que le dispositif de transport (4) présente un deuxième dispositif de retrait (12) pour les supports de disques (6), pouvant être commandé indépendamment du premier, les deux dispositifs de retrait (12) mobiles horizontalement sur le dispositif de transport (4) se trouvant chacune dans une position prête pour le retrait d'un support de disques (6) pour un disque (5) présent dans le magasin de réserve de disques (3) associé ou l'un des dispositifs de retrait (12) étant conduite dans une position centrale dans laquelle il fixe le disque (5) sorti du magasin de réserve de disques (3) avec le support de disques (6) concentrique par rapport au plateau tourne-disques (8) de l'unité de lecture (7), pendant que l'autre dispositif de retrait (12) demeure dans sa position prête pour l'autre magasin de réserve de disques (3).

**2.** Tourne-disques selon la revendication 1, <u>caractérisé en ce que</u> le dispositif de transport (4) portant un disque (5) avec le support de disques (6) dans son mouvement vers le bas au-dessus de l'unité de lecture (7) place dans sa position extrême le disque (5) moyennant soulèvement du support de disques (6) sur le plateau tourne-disques (8) et le plaque avec le plateau tourne-disques (8 ) au moyen d'un presseur de disques (76) disposé fixe sur le dispositif de transport (4).

**3.** Tourne-disques selon la revendication 1 ou 2, <u>caractérisé en ce que</u> plusieurs unités de lecture (7) avec chacune un dispositif de transport (4) associé sont disposées en rangée moyennant branchement intermédiaire d'un magasin de réserve de disques (3) ouvert des deux côtés, accessible à travers des dispositifs de transport (4), un autre magasin de réserve de disques (3) étant prévu à chaque extrémité de la rangée.

4. Tourne-disques selon l'une ou plusieurs des revendications 1 à 3, caractérisé en ce que chaque magasin de réserve de disques (3) verrouillé dans sa position fixe avec le boîtier (2) du tourne-disques (1), peut pivoter hors du boîtier (2) après suppression d'un premier verrouillage (19) autour d'un axe de pivotement (22) et peut être retiré du boîtier (2) après relâchement d'un deuxième verrouillage (20).

5. Tourne-disques selon la revendication 4, caractérisé en ce que les deux verrouillages (19, 20) du magasin de réserve de disques (3) sont reliés par l'intermédiaire d'une tige à un levier de décalage (21) de telle façon que lors d'un mouvement du levier de décalage (21) le magasin de réserve de disques (3) est déverrouillé dans un sens pour le pivotement et dans l'autre sens pour le retrait.

6. Tourne-disques selon l'une ou plusieurs des revendications 1 à 5, caractérisé en ce que chaque support de disques (6) est positionné par deux éléments de ressort (11) opposés, fixés sur le magasin de réserve de disques (3) dans une position assurée dans la case de réception (10) dans laquelle le support de disques (6) dépasse au-dessus du magasin de réserve de disques (3) aussi loin qu'il peut être saisi par le dispositif de retrait (12) associé du dispositif de transport (4).

7. Tourne-disques selon la revendication 6, caractérisé en ce que chaque élément de ressort (11) est constitué d'un étrier en forme de U dont les branches (14) s'engagent dans des rainures de guidage (13) sur le magasin de réserve de disques (3) et dont l'entretoise présente centralement une moulure (15) qui s'engage dans une découpe (17) située sur le côté longitudinal correspondant (16) du support de disques (6).

8. Tourne-disques selon la revendication 7, caractérisé en ce que les éléments de ressort (11) associés chacun sur un côté aux cases de réception (10) sont réunis en une bande continue moyennant connexion dans la zone de leurs branches (14).

9. Tourne-disques selon l'une ou plusieurs des revendications 1 à 8, caractérisé en ce que le support de disques (6) présente sur son côté inférieur dans le plan des découpes (17) opposées plusieurs boutons (30) qui empêchent une chute du disque (5) posé sur le support de disques (6) situé au-dessous.

10. Tourne-disques selon la revendication 9, caractérisé en ce qu'un des boutons (30) coopère avec un contact de commutation de commande pour constatation de la présence d'un disque (5) dans la case de réception (10).

11. Tourne-disques selon l'une ou plusieurs des revendications 1 à 10, caractérisé en ce que le support de disques (6) présente un évidement (24) recevant le disque (5) avec une zone marginale chanfreinée (25), qui passe dans une zone marginale verticale (26) et dans le fond (27) de l'évidement (24) une ouverture (28) dans laquelle le plateau tourne-disques (8) de l'unité de lecture (7) peut être introduit, et en ce que le fond (27) de l'évidement (24) possède un épaulement marginal (29) divisé en deux segments opposés pour soutien du disque (5) dans sa zone marginale ne portant pas de données enregistrées.

12. Tourne-disques selon l'une ou plusieurs des revendications 1 à 11, caractérisé en ce que le support de disques (6) possède sur ses côtés longitudinaux (16) dans chaque zone avant du côté inférieur un évidement (31) et en ce que le bras de saisie (32) du dispositif de retrait (12) du dispositif de transport (4) peut être apporté en engagement avec un de ces évidements (31) en fonction de la position du support de disques (6) dans la case de réception (10).

13. Tourne-disques selon la revendication 12, caractérisé en ce que le bras de saisie (32) est monté de façon à pouvoir être chargé et retiré dans un chariot (35) mobile dans les deux sens et est maintenu dans sa position chargée dans la position initiale du chariot (35) par un levier coudé à 90° (39) à sollicitation élastique avec levier d'arrêt (49) associé de telle façon que lors d'un mouvement du chariot (35) hors de la position initiale il peut être apporté par le levier coudé à 90° (39) dans la position retirée s'engageant dans l'évidement (31) du support de disques (6) et ensuite dans cette position par une butée fixe, située sur son côté arrière (51).

14. Tourne-disques selon la revendication 13, _caractérisé en ce que_ lors du mouvement du chariot (35) dans la position initiale limitée par une équerre butée (36) le levier coudé à 90° (39) est pivotant de telle sorte par le levier d'arrêt (49) articulé sur le levier coudé à 90° (39) qu'il retire celui-ci dans sa position chargée dans le chariot (35) moyennant engagement dans un évidement (41) correspondant dans le bras de saisie (32)

15. Tourne-disques selon les revendications 13 et 14, _caractérisé en ce qu'_un barrage photoélectrique (48) est associé au levier coudé à 90° (39) pour la constatation de la position initiale du chariot (35).

16. Tourne-disques selon la revendication 13, _caractérisé en ce que_ la butée pour le côté arrière (51) du bras de saisie (32) est formée par une paroi (52) de la partie supérieure (53) du dispositif de transport (4) et par une cheville ronde (54) située à chaque extrémité près de cette paroi (52), fixée à la partie inférieure (34) du dispositif de transport (4).

17. Tourne-disques selon l'une ou plusieurs des revendications 13 à 16, _caractérisé en ce que_ les chariots (35) des dispositifs de retrait (12) guidés coulissants sur une barre porteuse (37) peuvent être entraînés chacun par l'intermédiaire d'une commande à courroie (38) avec engrenage à vis sans fin (55) et moteur à sens de rotation réversible (56).

18. Tourne-disques selon l'une ou plusieurs des revendications 1 à 17, _caractérisé en ce qu'_un accouplement à friction (60) est prévu entre l'engrenage à vis sans fin (55) et la roue d'entraînement (58) de la courroie crantée (59) de la commande à courroie (38).

19. Tourne-disques selon l'une ou plusieurs des revendications 1 à 18, _caractérisé en ce que_ lors du retrait d'un support de disques (6) hors d'une case de réception (10) au moyen du chariot (35) de l'un des dispositifs de retrait (12), le chariot (35) de l'autre dispositif de retrait (12) sert de butée dans la position extrême du support de disques (6) sur un bras porteur en forme de U (33) du dispositif de transport (4).

20. Tourne-disques selon l'une ou plusieurs des revendications 1 à 19, _caractérisé en ce qu'_un barrage photoélectrique (63) est associé au bras porteur (33) du dispositif de transport (4) pour la surveillance de la position concentrique du disque (5) stocké dans le support de disques (6) par rapport au plateau tourne-disques (8) de l'unité de lecture (7), le support de disques (6) présentant une ouverture de passage de la lumière correspondante.

21. Tourne-disques selon l'une ou plusieurs des revendications 1 à 19, _caractérisé en ce qu'_un barrage photoélectrique est associé au bras porteur (33) du dispositif de transport (4) à chaque extrémité pour la surveillance de la position concentrique du disque (5) stocké dans le support de disques (6) par rapport au plateau tourne-disques (8) de l'unité de lecture (7).

22. Tourne-disques selon l'une ou plusieurs des revendications 1 à 21, _caractérisé en ce que_ le dispositif de transport (4) est monté coulissant sur deux barres de guidage (64) placées verticales disposées sur le côté arrière du boîtier (2) et est mobile vers le haut et vers le bas par l'intermédiaire d'une double commande à courroie (66, 69) avec moteur à sens de rotation réversible (71).

23. Tourne-disques selon la revendication 22, _caractérisé en ce que_ le moteur d'entraînement (71) conçu comme moteur pas à pas porte sur son axe (72) un rotor (73) qui tourne dans la fourche d'un coupleur à fourche (74) produisant des impulsions de positionnement.

24. Tourne-disques selon la revendication 2, _caractérisé en ce que_ le presseur de disques (76) comprend un bras de support (77) fixe, parallèle au bras porteur (33) du dispositif de transport (4) avec une tête de support (79), dans laquelle un insert de presseur de disque (83) est monté décalable longitudinalement et oscillant librement avec un aimant (85) disposé centralement, l'aimant (85) coopérant avec l'axe d'entraînement magnétisable (84) du plateau tourne-disques (8) de l'unité de lecture (7).

25. Tourne-disques selon la revendication 24, _caractérisé en ce que_ l'insert de presseur de disque (83) de la tête de support (79) possède sur ses bords une bague plate en caoutchouc (86) tournante qui en raison de l'effet dynamique entre l'aimant (85) et l'axe d'entraînement (84) du plateau tourne-disques (8) appuie le disque (5) sur le plateau tourne-disques (8) dans la position extrême du dispositif de transport (4).

26. Tourne-disques selon la revendication 24 ou 25, _caractérisé en ce que_ l'insert de presseur de disque (83) est monté par l'intermédiaire d'un cône (82) qui lui est relié dans une ouverture de réception (80) correspondante d'une paroi intermédiaire (81) de la tête de support (79).

27. Tourne-disques selon la revendication 2, caractérisé en ce que le presseur de disques (76) présente un bras de support (77) fixe, parallèle au bras porteur (33) du dispositif de transport (4) avec une tête de support (79), dans laquelle un insert de presseur de disque (83) avec un aimant (85) disposé centralement est monté décalable longitudinalement avec un jeu latéral relativement grand, qui coopère dans la position de repos de l'insert de presseur de disque (83) avec une plaque d'acier magnétisable (88) logée dans la tête de support (79) et dans la position de travail de l'insert de presseur de disque (83) avec l'axe d'entraînement magnétisable (84) du plateau tourne-disques (8) de l'unité de lecture (7).

28. Tourne-disques selon la revendication 27, caractérisé en ce que la plaque d'acier magnétisable (88) est pincée dans le côté inférieur du couvercle (78) de la tête de support (79) et coopère avec l'aimant (85) par l'intermédiaire d'une tige d'acier magnétisable (87) logée dans l'insert de presseur de disque (83).

29. Tourne-disques selon les revendications 27 et 28, caractérisé en ce que l'insert de presseur de disque (83) présente à la périphérie de son côté inférieur trois boutons (89) disposés décalés de 120 °les uns des autres, qui en raison de l'effet dynamique entre les aimants (85) et l'axe d'entraînement (84) du plateau tourne-disques (8) appuient le disque (5) sur le plateau tourne-disques (8) dans la position extrême du dispositif de transport (4).

30. Tourne-disques selon l'une ou plusieurs des revendications 1 à 29, caractérisé en ce qu'un tiroir (92) recevant un support de disques (6) avec un disque (5) introduit est associé à un magasin de réserve de disques (3) de telle sorte qu'à l'état poussé du tiroir (92) ce support de disques (6) avec le disque (5) est transportable au moyen du dispositif de transport (4) à l'unité de lecture (7) et de celle-ci à nouveau dans le tiroir (92) et qu'à l'état tiré du tiroir (92) le disque (5) porté par le support de disques (6) peut être remplacé manuellement.

31. Tourne-disques selon l'une ou plusieurs des revendications 1 à 30, caractérisé en ce qu'un bouton de service spécial est prévu, par l'intermédiaire duquel le dispositif de transport (4) est mobile de sa position extrême inférieure dans une position extrême supérieure et ensuite à nouveau dans la position extrême inférieure, l'unité de lecture (7) étant commutable par l'intermédiaire d'un autre bouton de service.

Fig.1

EP 0 439 483 B1

Fig. 2

Fig. 4

Fig. 3

Fig. 5

EP 0 439 483 B1

Fig. 6

Fig.7

89

83

*Fig.9*

76

78

87

88

79

89  83  85  *Fig.8*  89

8

Fig. 10

Fig. 11